(19) Europäisches Patentamt
European Patent Office
Office européen des brevets

(11) Publication number: **0 535 596 A1**

# (12) EUROPEAN PATENT APPLICATION

(21) Application number: **92116658.3**

(22) Date of filing: **29.09.92**

(51) Int. Cl.$^5$: **A01N 57/20**, A01N 25/30, A01N 25/24, A01N 25/04, //(A01N57/20,55:00)

(30) Priority: **30.09.91 US 767960**

(43) Date of publication of application: **07.04.93 Bulletin 93/14**

(84) Designated Contracting States: **DE FR GB**

(71) Applicant: **DOW CORNING CORPORATION**
**P.O. Box 1767**
**Midland Michigan 48686-0994(US)**

(72) Inventor: **Petroff, Lenin James**
**3140 East Riverview**
**Bay City, Michigan(US)**
Inventor: **Snow, Steven Ashley**
**42 Beech Street**
**Sanford, Michigan(US)**

(74) Representative: **Spott, Gottfried, Dr. et al**
**Spott Weinmiller & Partner**
**Sendlinger-Tor-Platz 11**
**W-8000 München 2 (DE)**

## (54) Herbicidal compositions containing a silicone adjuvant.

(57) There is disclosed a herbicidal composition in which a foliar-applied N-phosphonomethylglycine (glyphosate), or an agriculturally acceptable salt thereof, is activated by the inclusion of certain cationic, anionic, nonionic or zwitterionic silicone adjuvants. The composition provides enhanced phytotoxicity and rainfastness in the control of weeds, particularly velvetleaf plants.

EP 0 535 596 A1

This invention relates to foliar-applied herbicide formulations. More particularly, the present invention relates to compositions of foliar-applied herbicides which are activated by the inclusion of certain cationic, anionic, nonionic or zwitterionic silicone adjuvants.

It is well recognized in the art that the full efficacy of a given organic herbicide is not generally attained without the inclusion of various adjuvants, an adjuvant being broadly defined as any substance which enhances the effectiveness of the herbicide. Thus, for example, through proper formulation with an activity-increasing adjuvant, the control of a particular plant species by a herbicide can be greatly augmented. Such an activity-increasing adjuvant does not generally have biological activity on its own but only brings out the activity of the herbicide.

The augmentation of herbicidal activity by silicone glycol adjuvants was reported by L. L. Jansen (Weed Science, v. 21, pages 130-135, March, 1973). In this study, amine-functional silicone surfactants were also evaluated, but found to be generally less effective than organic adjuvants. In any event, no specific structures of the silicone compounds were provided and the author expressly echoed the widely held opinion that the effectiveness of a given adjuvant is highly unpredictable.

In addition to the herbicidal enhancement provided by the activity-increasing adjuvants discussed above, it is often important that herbicide formulations retain a significant degree of activity when plants treated therewith are exposed to rain shortly after application, this being a definition of the degree of "rainfastness." This is particularly critical for water-soluble foliar-applied herbicides, such as glyphosate salts, which may be washed away by rainfall occurring within about six hours of application. Typically, this problem is currently addressed by inclusion of another class of adjuvants in the herbicide formulation, namely sticking agents. The main function of these materials, as the appelation implies, is to impart an increased measure of adhesion of the herbicide composition to plant foliage and thus reduce premature washing away should precipitation occur after the plants are sprayed. The sticking agents are usually polymeric compounds which are generally water-soluble and tacky in nature.

It has now been unexpectedly found that after-rain phytotoxicity of glyphosate herbicides can be significantly increased by the inclusion of certain cationic, anionic, nonionic or zwitterionic silicone adjuvants. Moreover, this improvement in rainfastness is obtained without the need for an additional sticking agent.

The present invention therefore relates to a composition comprising:

(I) a foliar-applied herbicide selected from the group consisting of N-phosphonomethylglycine and an agriculturally acceptable salt of N-phosphonomethylglycine; and

(II) from about 0.01 to about 50 parts by weight, for each part by weight of said herbicide (I), of at least one silicone adjuvant having the structure

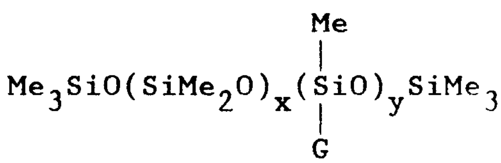

wherein Me denotes a methyl radical, x is 0 or 1, y is 1 or 2 and G is selected from the group consisting of

$$-R^1-\overset{+}{N}-R^2_3 \qquad X^- ,$$

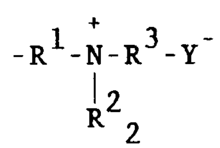

,

$-R^1-N-R^2_2$ and

$-R^1-Y^- \ M^+$

in which $R^1$ and $R^3$ each represent a divalent organic connecting group having 2 to 10 carbon atoms selected from the group consisting of alkylene groups, alkylene ether groups, alkylene thioether groups,

hydroxyl-substituted alkylene groups, hydroxyl-substituted alkylene ether groups and hydroxyl-substituted alkylene thioether groups, $R^2$ is independently selected from the group consisting of alkyl radicals having 1 to 10 carbon atoms and hydroxyalkyl groups having 1 to 5 carbon atoms, $X^-$ is a counter ion selected from the group consisting of $Cl^-$, $Br^-$, $I^-$, $NO_3^-$, $BF_4^-$, $PF_6^-$, $R^4SO_3^-$ and $R^4COO^-$, in which $R^4$ is an alkyl group having 1 to 5 carbon atoms, $Y^-$ is a terminal ionic group selected from the group consisting of $-COO^-$ and $-SO_3^-$ and $M^+$ is selected from the group consisting of $K^+$ and $Na^+$.

The present invention further relates to a method for inhibiting the growth of narrowleaf annual and perennial weeds, particularly velvetleaf, comprising contacting at least part of the weed with the aforementioned herbicidal composition.

The foliar-applied herbicide (I) of the present invention is N-phosphonomethylglycine (glyphosate) or an agriculturally acceptable salt thereof. These compounds are known articles of commerce, the isopropylamine salt of this compound being marketed under the trade name ROUNDUP™ (Monsanto Agricultural Products Co., St. Louis, MO)2, and being particularly preferred.

Silicone adjuvant (II) is at least one compound having the structure

$$Me_3SiO(SiMe_2O)_x(\overset{\displaystyle Me}{\underset{\displaystyle G}{Si}}O)_ySiMe_3 \qquad (i)$$

wherein Me hereinafter denotes a methyl radical, x is 0 or 1 and y is 1 or 2. For the purposes of the invention, the pendant group G in formula (i) may be a quaternary amine/counterion combination having the formula:

$$-R^1-\overset{+}{N}-R^2_3 \qquad X^- \qquad (ii)$$

a betaine zwitterionic structure:

$$-R^1-\underset{\displaystyle R^2_2}{\overset{+}{N}}-R^3-Y^- \qquad (iii)$$

a non-ionic amine structure:

$-R^1-N-R^2_2$ (iv)

or an anionic/counterion combination:

$-R^1-Y^-\ M^+$ (v)

In formulas (ii) through (v), $R^1$ and $R^3$ each represent a divalent organic connecting group having 2 to 10 carbon atoms selected from the group consisting of alkylene groups, alkylene ether groups, alkylene thioether groups, hydroxyl-substituted alkylene groups, hydroxyl-substituted alkylene ether groups and hydroxyl-substituted alkylene thioether groups. As used herein, the term "alkylene ether" refers to structures having alkylene segments separated by an oxygen atom, such as the groups having the following formulae $-CH_2CH_2CH_2-O-CH_2CH_2CH_2-$, $-CH_2CH_2CH_2-O-CH_2CH_2CH_2CH_2CH_2CH_2-$,$-CH_2CH_2-O-CH_2CH_2CH_2-$ and the like.

Likewise, the term "alkylene thioether" is used herein to describe similar structures wherein a sulfur group replaces the oxygen, exemplified by such structures as $-CH_2CH_2CH_2-S-CH_2CH_2CH_2-$, $-CH_2CH_2CH_2-S-CH_2CH_2CH_2CH_2CH_2CH_2-$,$-CH_2CH_2-S-CH_2CH_2CH_2-$ , inter alia.

Each of the above mentioned groups which are represented by $R^1$ and $R^3$ may further contain hydroxyl functionality along its chain, preferred structures of this type being $-CH_2CH_2CH_2-O-CH_2CH(OH)CH_2$ - and

$-CH_2CH_2CH_2-S-CH_2CH(OH)CH_2-$.

In above formulae (ii) through (iv), $R^2$ is independently selected from alkyl radicals having 1 to 10 carbon atoms and hydroxyalkyl groups having 1 to 5 carbon atoms. Preferred embodiments in this regard include methyl and hydroxyethyl. To complete the definition of the group G in formula (i), it is contemplated that $X^-$ is a counter anion selected from $Cl^-$, $Br^-$, $I^-$, $NO_3^-$, $BF_4^-$, $BF_6^-$, $R^4SO_3^-$ or $R^4COO^-$, in which $R^4$ is an alkyl group having 1 to 5 carbon atoms, $Y^-$ is a terminal ionic group selected from $-COO^-$ or $-SO_3^-$ and $M^+$ is a metal cation selected from $K^+$ or $Na^+$.

The various silicone adjuvant structures described above are known in the art and detailed preparative methods therefor are not repeated herein. Thus, for example, the non-ionic amine functional silicones can be prepared by a platinum-catalyzed hydrosilation reaction of the corresponding SiH functional precursor with a terminally unsaturated organoamine. The resultant amine functional silicone can then be reacted with a cyclic alkyl sultone to form a sulfobetaine functional silicone (i.e., $Y^-$ in formula (iii) is $SO_3^-$) according to methods described in United States Patent 4,918,210 to Fenton et al. Likewise, the amine functional silicone can then be reacted with a halogenated salt of a carboxylic acid to form a carboxyl betaine functional silicone (i.e., $Y^-$ in formula (iii) is $COO^-$) according to methods described in United States Patent No. 4,912,240 to Owen et al.

The silicone adjuvants which contain the group represented by above formula (ii) may also be prepared from the corresponding amine functional silicone, in this case by reaction with, e.g., an organohalide such as methyl iodide at elevated temperatures. Alternatively, some of these silicones may be prepared by reacting the corresponding halogen functional silicone with a tertiary amine, as disclosed in British Patent 1,006,729 to Imperial Chemical Industries, Limited and United States Patents 5,026,489 and 5,041,590 to Snow et al.

Anionic functional silicones which contain groups of formula (v) can be prepared according to methods described in United States Patents 4,777,277 and 4,814,471 to Renauld et al.

In addition to the aforementioned components, the compositions of the present invention may also contain other herbicide adjuvants commonly employed in the art. Examples of other adjuvants include crop oil concentrate, ORTHO™ X-77 spreader, drift control agents, such as LO-DRIFT™, defoaming agents, such as D-FOAMER™, compatibility agents, such as E-Z MIX™, and other adjuvants well known in the herbicide art.

In order to prepare the compositions of the present invention, from about 0.01 to about 50 parts by weight of the silicone adjuvant (II) is thoroughly mixed with each part by weight of herbicide (I). Preferably, from about 0.2 to about 17 parts by weight of (II) are employed for each part of (I). For a given situation, the skilled artisan will readily arrive at a herbicidal composition having the optimum ratio of the ingredients by routine experimentation. The above herbicidal composition may then be dispersed in water and sprayed onto plants according to the method of the present invention, described infra. Preferably, the silicone adjuvant (II) is first mixed with an effective amount of a dispersant, such as a solvent or a co-surfactant and this mixture is then thoroughly blended with an aqueous dispersion of herbicide (I). As used herein, the term "effective amount" means the least quantity of a given dispersant which will facilitate the formation of a stable dispersion of silicone adjuvant (II) in the aqueous herbicide composition. This amount will be readily determined by the skilled artisan through routine experimentation. Typically, the dispersant to silicone adjuvant weight ratio found to be effective is about 0.5:1 to 3:1, a ratio of about 1:1 being preferred.

Suitable solvents for this purpose include toluene, xylene, acetone and alcohols. Suitable co-surfactants include silicone glycol copolymers, such as the dispersants described as component (ii) in United States Patent No. 4,933,002 to Petroff et al., the copolymer designated as DISPERSANT 1 being highly preferred. Other useful co-surfactants include phosphate esters of the ethylene oxide-adduct type, such as materials marketed under the trade name GAFAC™ by GAF Corp., Wayne, NJ and alkyl polyoxyalkane ethers marketed under the trade name INDUCE™ by Helena Chemical Co., Memphis, TN.

The present invention also relates to a method for inhibiting the growth of weeds, particularly the species Abutilon theophrasti, hereinafter referred to by its common name of "velvetleaf." This method comprises contacting at least part of the weed with the above described herbicidal composition. This composition, usually in water dispersion form, is applied to the foliage of the weed by any of the methods commonly practiced in the art, preferably by spraying. The composition may be either a package mix or a tank mix. The amount of the dispersion, and the herbicide contained therein, to be applied to the weed may be varied to a great extent, the optima being determined by such factors as soil conditions, weather conditions and the type of crops or other plants growing alongside the weed. Generally, however, the effective application rate is adjusted so as to provide about 0.5 to 10 pounds per acre of the herbicide (I). The skilled artisan is directed to United States Patent Numbers 3,799,758 and 4,405,531, for further suggestions as to appropriate application rates for N-phosphonomethylglycine based herbicides.

When the compositions of the present invention are used according to the above described method, there is observed a statistically significant improvement in the rainfastness of the herbicidal compositions relative to unmodified herbicide. There is provided a distinct advantage by the instant compositions in that they permit the use of lower herbicide levels to attain a similar degree of injury to a weed, this advantage being maximized when there is a reasonable likelihood of precipitation after applying the herbicide. Such a reduction in herbicide levels generally results in reduced injury to adjacent cash crops and is considered highly desirable.

The following examples are presented to further illustrate the compositions of this invention, but are not to be construed as limiting the invention, which is delineated in the appended claims. All parts and percentages in the examples are on a weight basis unless indicated to the contrary.

Silicone adjuvants of the present invention were prepared, each of which had the structure

$$Me_3SiO(SiMe_2O)_x(\overset{\overset{Me}{|}}{\underset{\underset{G}{|}}{Si}}O)_ySiMe_3$$

wherein Me hereinafter denotes a methyl radical and the values of x and y, as well as the definition of the respective group G, are provided in Table 1.

Table 1

| Example | x | y | G |
|---|---|---|---|
| 1 | 0 | 1 | $-(CH_2)_3-N^+(Me)_2(CH_2CH_2CH_2SO_3^-)$ |
| 2 | 1 | 1 | do |
| 3 | 0 | 2 | do |
| 4 | 0 | 1 | $-(CH_2)_3-N^+(Me)(CH_2CH_2OH)$<br>$(CH_2)_3SO_3^-$ |
| 5 | 0 | 1 | $-(CH_2)_3O-CH_2CH(OH)CH_2-N^+(Me)(CH_2CH_2OH)$<br>$(CH_2)_3SO_3^-$ |
| 6 | 0 | 1 | $-(CH_2)_3-N^+(Me)_2(CH_2COO^-)$ |
| 7 | 0 | 1 | $-(CH_2)_3-N^+(Me)_3$ $I^-$ |
| 8 | 1 | 1 | do |
| 9 | 0 | 1 | $-(CH_2)_3-N^+(Me)_2(CH_2CH_2OH)$ $I^-$ |
| 10 | 0 | 1 | $-(CH_2)_3-N^+(Me)_2(CH_2CH_2OH)$ $Cl^-$ |
| 11 | 0 | 1 | $-(CH_2)_3O-CH_2CH(OH)CH_2-$ $I^-$<br>$HOCH_2CH_2-N^+(Me)_2$ |
| 12 | 0 | 1 | $-(CH_2)_3SCH_2CH(OH)CH_2SO_3^-$ $Na^+$ |
| 13 | 0 | 1 | $-(CH_2)_3OCH_2CH(OH)CH_2SO_3^-$ $Na^+$ |
| 14 | 0 | 1 | $-(CH_2)_3OCH_2CH(OH)CH_2N(Me)(CH_2CH_2OH)$ |
| 15 | 0 | 1 | $-(CH_2)_3OCH_2CH(OH)CH_2N(CH_2CH_2OH)_2$ |

The silicone adjuvant of Example 14 was prepared from the corresponding glycidoxy functional siloxane wherein the group G had the structure

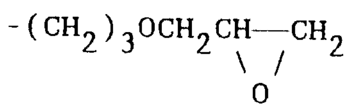

The silicone adjuvant of Example 14 was prepared from the corresponding glycidoxy functional siloxane wherein the group G had the structure

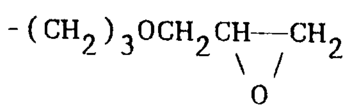

Equimolar quantities of this siloxane and N-methyl-ethanolamine were heated to 90 ° C. under nitrogen, at which point an exotherm was observed. The mixture was allowed to cool to 90 ° C. and stirred for two hours. Analysis by gas chromatography indicated a 98% consumption of reactants. The product was stripped at 90 ° C. for two and one half hours to a pressure of about 1 mm Hg to yield a clear, viscous liquid. Analysis

by IR and nmr was consistent with the structure shown. The silicone of Example 15 was prepared in a similar fashion wherein diethanolamine was substituted for the N-methyl-ethanolamine.

The silicone adjuvant of Example 14 was used to prepare the compound of Example 11 wherein 35.5 grams of the Example 14 product were combined with 12.7 grams of methyl iodide and 125 ml of dry hexane. This mixture was refluxed under nitrogen overnight and the volatiles stripped off.

Additionally, the silicone adjuvant of Example 14 was used to prepare the compound of Example 5 wherein 35.2 grams of the Example 14 product were combined with 10.4 grams of 1,3-propane sultone and 125 ml of dry hexane. This mixture was refluxed under nitrogen overnight and the volatiles were stripped off, resulting in a "gummy" product.

The other silicone adjuvants were prepared by methods well known in the art, as described supra.

Aqueous dispersions of herbicidal compositions were prepared by first thoroughly mixing each of the above silicone adjuvants with an equal weight of toluene. Each of these blends was, in turn, dispersed in a water dispersion of ROUNDUP™ so as to constitute 0.5% silicone adjuvant in the final composition.

A similar series of comparative formulations containing 0.5% silicone adjuvant was prepared using a water-based dispersion of the herbicide BLAZER™. This herbicide is described as acifluorfen-sodium and is marketed by BASF Corporation (Research Triangle Park, NC).

Individually potted velvetleaf plants were grown under standard greenhouse conditions in BACCTO professional potting soil mix. Temperature was controlled at 75 +/-2°F. Irradiation consisted of normal sunlight supplemented by high-pressure sodium vapor lamps to provide an added 1,200 $\mu E/m^2 \cdot s$ at bench level ($\mu E$ = microeinstein), wherein the day/night cycle was set at 18 hours and 6 hours, respectively.

When the plants were 3 to 5 inches tall, they were sprayed with water dispersions of the herbicide compositions so as to broadcast the herbicide composition at rates found to produce an approximately 50% injury rate to the plant under no-rain conditions (0.5 pounds/acre for ROUNDUP™ and 0.13 pounds/acre for BLAZER™). Spraying was accomplished by means of a link-belt sprayer fitted with a TEEJET 8001 E nozzle which delivered the equivalent of 25 gallons/acre of the herbicide dispersion.

In addition, the rainfastness of the herbicide compositions was evaluated by spraying half the plants with water in order to simulate rainfall. This procedure consisted of spraying plants from above (8-10 inches above plant tops) using a TEEJET nozzle which delivered 0.4 gallons of water per minute. This nozzle was also mounted on a chain drive and reciprocally moved over four plants at a time, each such traverse taking about 9-10 seconds. The water spray was started 15 minutes after application of the herbicide compositions and was continued for approximately 7 minutes, at which point the equivalent of one inch of "rain" had fallen on each plant.

Plant injury was visually determined using a double-blind experimental mode wherein four replicates were run for each herbicide composition. Phytotoxicity was ranked from zero, corresponding to no observable effect, to 100%, corresponding to total destruction of the plant. These results were averaged and the values reported using Duncan's multiple range test to distinguish statistical differences at the 95% confidence level. As is common practice in the art, the injury values reported infra include lower case letters which indicate whether any given set of values is statistically identical. Thus, for example, when two injury values for a given herbicide series (e.g., the systems containing ROUNDUP™) have such letters in common, this is an indication that these values are not statistically different at the 5% level by Duncan's method.

The above described herbicide dispersions were used to spray velvetleaf plants and the degree of injury, both with and without rain simulation, was observed. Since ROUNDUP™ is known to be a slow absorbing, systemic herbicide, the plants treated with these herbicide compositions were observed 14 days after spraying while plants treated with the BLAZER™ systems were observed after 7 days since BLAZER™ is known to be a contact, non-systemic, herbicide, these observation periods being deemed appropriate for the determination of phytotoxic activity in these respective herbicide systems. These results, along with the Duncan statistical annotations, are presented in Table 2. For each herbicide series, results on control plants which were not sprayed with any herbicide composition and results on plants which were sprayed with only toluene (at 0.25% of total spray composition) are included in the table.

Table 2

| SILICONE ADJUVANT | Percent Injury to Plant | | | |
|---|---|---|---|---|
| | Herbicide = ROUNDUP™ | | Herbicide = BLAZER™ | |
| | No Rain | With Rain | No Rain | With Rain |
| Example 1 | 70 c-g | 73 c-f | 60 ghi | 18 mn |
| Example 2 | 80 bc | 75 cde | 55 hij | 18 mn |
| Example 3 | 93 a | 85 ab | 58 ghi | 15 mno |
| Example 4 | 65 f-l | 70 c-g | 63 gh | 20 m |
| Example 5 | 68 e-h | 68 e-h | 80 bcd | 3 pq |
| Example 6 | 55 jk | 33 mn | 68 efg | 18 mn |
| Example 7 | 60 h-k | 58 ijk | 78 cde | 13 m-p |
| Example 8 | 60 h-k | 63 g-j | 68 efg | 8 n-q |
| Example 9 | 78 bcd | 75 cde | 80 bcd | 8 n-q |
| Example 10 | 63 g-j | 63 g-j | 75 def | 8 n-q |
| Example 11 | 58 ijk | 70 c-g | 60 ghi | 8 n-q |
| Example 12 | 60 h-k | 65 f-i | 50 ij | 3 pq |
| Example 13 | 78 bcd | 78 bcd | 60 ghi | 50 ij |
| Example 14 | 73 c-f | 78 bcd | 33 l | 0 q |
| Example 15 | 55 jk | 53 k | 0 q | 0 q |
| Control (no herbicide) (no adjuvant) | 0 p | 0 p | 0 q | 0 q |
| Toluene only (no herbicide) | 0 p | 0 p | 0 q | 0 q |

It can be seen from Table 2 that the combination of the silicone adjuvants of the present invention with the ROUNDUP™ herbicide provided significantly improved phytotoxicity after exposure to simulated rain conditions relative to the corresponding systems wherein the herbicide was BLAZER™. Thus, although the no rain injury rate was approximately equivalent in the two herbicide systems, there was a dramatic decrease in injury after simulated rainfall only in the case of the BLAZER™ systems, the combination of BLAZER™ and the silicone adjuvant of Example 13 providing the only unexplained exception.

**Claims**

**1.** A composition comprising

(I) a foliar-applied herbicide selected from the group consisting of N-phosphonomethylglycine and an agriculturally acceptable salt of N-phosphonomethylglycine; and

(II) from 0.01 to 50 parts by weight, for each part by weight of said herbicide (I), of a silicone adjuvant selected from the group consisting of the structures

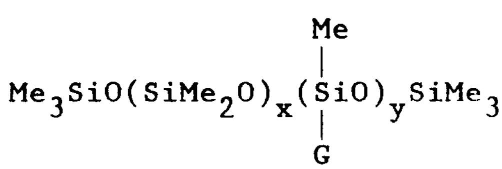

and

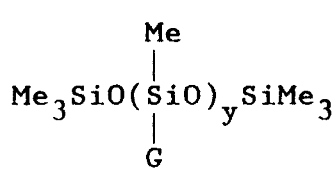

wherein Me denotes a methyl radical, y is 1 or 2 and G is selected from the group consisting of

$$-R^1-\overset{+}{N}-R^2{}_3 \quad X^- ,$$

$$-R^1-\overset{+}{N}(R^2{}_2)-R^3-Y^- ,$$

$-R^1-N-R^2{}_2$ and
$-R^1-Y^- M^+$

in which $R^1$ and $R^3$ each represent a divalent organic connecting group having 2 to 10 carbon atoms selected from the group consisting of alkylene groups, alkylene ether groups, alkylene thioether groups, hydroxyl-substituted alkylene groups, hydroxyl-substituted alkylene ether groups and hydroxyl-substituted alkylene thioether groups, $R^2$ is independently selected from the group consisting of alkyl radicals having 1 to 10 carbon atoms and hydroxyalkyl groups having 1 to 5 carbon atoms, $X^-$ is a counter ion selected from the group consisting of $Cl^-$, $Br^-$, $I^-$, $NO_3{}^-$, $BF_4{}^-$, $PF_6{}^-$, $R^4SO_3{}^-$ and $R^4COO^-$, in which $R^4$ is an alkyl group having 1 to 5 carbon atoms, $Y^-$ is a terminal ionic group selected from the group consisting of $-COO^-$ and $-SO_3{}^-$ and $M^+$ is selected from the group consisting of $K^+$ and $Na^+$.

**2.** An aqueous dispersion of the composition of claim 1, further comprising an effective amount of a dispersant for said silicone adjuvant (II) wherein from 0.2 to 17 parts by weight of component (II) are employed for each part of component (I).

**3.** In a method for inhibiting the growth of a weed comprising contacting at least part of the weed with a herbicidal formulation, the improvement comprising using as said herbicidal formulation a homogeneous aqueous dispersion of the composition of claim 1.

European Patent Office

# EUROPEAN SEARCH REPORT

Application Number

EP 92 11 6658
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 403 169 (DOW CORNING)<br>* page 1, line 1 - page 4, line 21 *<br>* claims 1,2 *<br>--- | 1-3 | A01N57/20<br>A01N25/30<br>A01N25/24<br>A01N25/04<br>// (A01N57/20, 55:00) |
| Y | WEED SCIENCE<br>vol. 25, no. 3, March 1977,<br>pages 275 - 287<br>J.B.WYRILL ET AL. 'Glyphosate Toxicity to Common Milkweed and Hemp Dogbane as Influenced by Surfactants'<br>* the whole document *<br>--- | 1-3 | |
| D,Y | US-A-5 041 590 (DOW CORNING)<br>* the whole document *<br>--- | 1-3 | |
| A | EP-A-0 355 650 (DOW CORNING)<br>* page 2, line 17 - line 52 *<br>* page 3, line 2 - line 7 *<br>--- | 1-3 | |
| A | WO-A-8 912 394 (MONSANTO)<br>* page 8, line 1 - page 12, line 20 *<br>* page 13, line 6 - page 14, line 10 *<br>* page 25, line 10 - line 20 *<br>* page 48, line 1 - page 62, line 17 *<br>--- | 1-3 | TECHNICAL FIELDS SEARCHED (Int. Cl.5 )<br><br>A01N |
| A | EP-A-0 394 211 (MONSANTO)<br>* page 4, line 55 - page 13, line 10 *<br>* claims 1,8 *<br>--- | 1-3 | |
| A | EP-A-0 429 293 (DOW CORNING)<br>* the whole document *<br>--- | 1-3 | |
| D,A | US-A-4 918 210 (W.N.FENTON ET AL.)<br>* the whole document *<br>--- | 1-3 | |
| D,A | US-A-4 912 240 (M.J.OWEN ET AL.)<br>* the whole document *<br>---<br>-/-- | 1-3 | |

The present search report has been drawn up for all claims

| Place of search | Date of completion of the search | Examiner |
|---|---|---|
| THE HAGUE | 18 DECEMBER 1992 | LAMERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

European Patent Office

# EUROPEAN SEARCH REPORT

Application Number

EP 92 11 6658
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | US-A-4 814 471 (F.A.D.RENAULD)<br>* the whole document *<br>--- | 1-3 | |
| D,A | WEED SCIENCE<br>vol. 21, no. 2, March 1973,<br>pages 130 - 135<br>L.L.JANSEN 'Enhancement of Herbicides by Silicone Surfactants'<br>----- | 1-3 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 18 DECEMBER 1992 | LAMERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document